# EUROPEAN PATENT APPLICATION

(11) **EP 4 621 577 A1**
(43) Date of publication of application: **24.09.2025**
(21) Application number: 24382312.7
(22) Date of filing: 22.03.2024
(51) Int. Cl.: G06F 11/36, G06N 20/00

(54) **COMPUTER IMPLEMENTED METHOD AND COMPUTER FOR UNIT TEST GENERATION**

(71) Applicant: Ikerlan, S. Coop., 20500 Arrasate-Mondragon (ES)
(72) Inventor: HEUKAMP, Jan, 20500 Arrasate-Mondragon (ES); PARRA MOLINA, Jorge, 20500 Arrasate-Mondragon (ES); ESTEPA SANZ, Daniel, 20500 Arrasate-Mondragon (ES); IRCIO FERNANDEZ, Josu, 20500 Arrasate-Mondragon (ES); PEREZ CERROLAZA, Juan Martin, 20500 Arrasate-Mondragon (ES); ZAMALLOA AKIZU, Maider, 20500 Arrasate-Mondragon (ES); LOJO NOVO, Aizea, 20500 Arrasate-Mondragon (ES); BILBAO UGALDE, Josu, 20500 Arrasate-Mondragon (ES); GONZALEZ HIERRO, Marco, 20500 Arrasate-Mondragon (ES); MORAN MONTES, Adrian, 20500 Arrasate-Mondragon (ES); IMAZ MARIN, Jon, 20500 Arrasate-Mondragon (ES)
(74) Representative: Galbaian S.Coop.

(57) **Abstract**

Computer-implemented method for generating unit tests of a function, comprising obtaining initial values for the parameters of the function that activate a code element of the function, such that if the code element is not activated, the method iterates to obtain corrected values for those parameters that activate the code element, wherein obtaining the initial values and the corrected values of the parameters is done by interaction with an LLM.

## Description

### TECHNICAL FIELD

The present invention relates to computer-implemented methods and computers for the generation of unit tests of a function.

### PRIOR ART

Nowadays, software is becoming increasingly large and complex, and the existence of defects in said software can lead to financial losses and significant damage to the reputation of the companies or organisations that use it. Unit tests verify the correctness of individual functions or individual units of source code, and play a key role in software development today. However, generating unit tests is a tedious and labour-intensive task, causing some developers to avoid writing unit tests. This fact has inspired research into different techniques that allow automated unit test generation.

US20090094486A1 describes a system and a method for randomly generating test cases for a piece of software from a matrix of possible values for each parameter p of said piece of software, denoted Sₚ. Each matrix has a number mₚ of possible values for each respective parameter, denoted cardinality. The method uses a prime number qₚ, which is the next prime number greater than or equal to mₚ. In order to determine which of the values in the matrix Sₚ associated with each parameter is to be used in the unit test to be generated, the value nₚ indicating the position of the value to be selected within the respective matrix is calculated for each test number t, where nₚ = t mod qₚ + 1, so that if nₚ > mₚ nₚ =nₚ mod mₚ. However, in the system and method described in US20090094486A1 it is necessary for a developer to generate the matrix Sₚ of possible values for each parameter p of the piece of software, which requires work that necessarily has to be done by the developer of the piece of software, while it does not guarantee that the generated test cases test all lines of code.

### DISCLOSURE OF THE INVENTION

The object of the invention is to provide a computer-implemented method, a non-transitory computer-readable storage medium, and a computer for generating unit tests of a function, as defined in the claims.

The computer-implemented method for generating unit tests of a function of the invention comprises a receiving step, wherein the source code of the function is received, the function comprising at least one parameter and a plurality of lines of code. Next, the method comprises an iterative unit test generation step, wherein a plurality of unit tests are generated for the function.

The iterative unit test generation step comprises a selection step, wherein a code element to be tested is selected from the source code, and next, an input generation step, wherein an initial value is generated for each parameter of the function. The input generation step comprises an initial prompt generation step, wherein an initial prompt is generated based on the source code of the function and the code element to be tested, a step of interaction with an LLM (Large Language Model), wherein the LLM is provided with the initial prompt, and is requested to return an initial value for each parameter of the function that activates the code element to be tested, and an initial text output reception step, wherein an initial text output containing the initial value for each parameter of the function is received from the LLM.

Following the input generation step, the iterative unit test generation step comprises an iterative sequence of validation steps that terminates when it is determined that the code element to be tested has been activated. Said iterative sequence of validation steps comprises a simulation step, wherein the execution of the function is simulated by assigning a simulation value to each parameter of the function, and a trace of the execution of the function is generated, the simulation value being initially the initial value of each parameter, an activation check step after the simulation step, wherein it is determined whether the code element to be tested has been activated in the simulation step, and an input correction step which is performed after the activation check step if in the activation check step it is determined that the code element to be tested has not been activated in the simulation step.

The input correction step comprises a correction prompt generation step, wherein a correction prompt is generated based on the source code of the function, the code element to be tested, the simulation values, and the trace obtained in the simulation step, a step of interaction with the LLM, wherein the LLM is provided with the correction prompt and is requested to return a corrected value for each parameter of the function that activates the code element to be tested, and a correction text output reception step, wherein a correction text output containing the corrected value for each parameter of the function is received from the LLM, such that, upon receipt of the correction text output, the simulation value of each parameter is updated with the respective corrected value and the method returns to the simulation step.

The iterative unit test generation step comprises a code generation step that is performed after the iterative sequence of validation steps, wherein the source code of the unit test for the code element to be tested is generated, a code coverage calculation step following the code generation step, wherein the coverage of the function is calculated, and a code coverage check step, wherein it is determined whether all code elements of the function have been tested, such that, if any code elements remain to be tested, the selection step is then performed, another code element to be tested being selected.

The computer-implemented method of the invention allows the automatic generation of unit tests using a commercially available LLM, without the need for additional training of said LLM, and without the developer having to provide the values of the parameters of the function that will later be used in the generation of the unit tests. Due to the use of an LLM, the unit tests generated using the method of the invention are much more similar to those that a human developer would write than those produced using other methods known in the prior art, in addition to achieving a high coverage of the function.

In a second aspect the invention also relates to a non-transitory computer-readable storage medium that stores thereon a plurality of instructions which, when executed by a computer, cause said computer to carry out the steps of the method of the invention.

In a third aspect the invention also relates to a computer comprising a processor and a non-transitory computer-readable storage medium operatively coupled to the processor, the non-transitory computer-readable storage medium storing thereon a plurality of instructions which, when executed by the processor, cause the computer to perform the steps of the method of the invention.

These and other advantages and features of the invention will become apparent in view of the figures and the detailed description of the invention.

### DESCRIPTION OF THE DRAWINGS

Figure 1 shows a flow diagram of a first embodiment of the computer-implemented method of the invention.
Figure 2 shows a flow diagram with the detail of the input generation step 22 of the method of the invention.
Figure 3 shows a flow diagram with the detail of the input correction step 25 of the method of the invention.
Figure 4a shows an example of the source code of a function, and Figure 4b shows an example of a trace of the execution of the function in Figure 4a.
Figure 5 shows a flow diagram of a second embodiment of the computer-implemented method of the invention.
Figure 6a shows an example of a trace generated in the simulation step 23, and Figure 6b shows an example of a compressed trace obtained in the loop compression step 31 from the trace in Figure 6a.
Figure 7 shows a flow diagram of a third embodiment of the computer-implemented method of the invention.
Figure 8 shows a flow diagram with the detail of the trace compression step 32.
Figure 9 shows a flow diagram of a fourth embodiment of the computer-implemented method of the invention.
Figure 10 shows a flow diagram of a fifth embodiment of the computer-implemented method of the invention.
Figure 11 shows a flow diagram with the detail of the equation management step 33.
Figure 12a shows an example of a trace generated in the simulation step 23, and Figure 12b shows an example of a script generated in the equation generation step 331 from the trace in Figure 12a.
Figure 13a shows an example of a trace generated in the simulation step 23, and Figure 13b shows an example of a script generated in the equation generation step 331 from the trace in Figure 13a.
Figure 14 shows a schematic depiction of an embodiment of the computer 500 configured to implement the method of the invention.
Figure 15 shows a flow diagram of a sixth embodiment of the computer-implemented method of the invention.
Figure 16a shows an example of a trace, and Figures 16b and 16c show an example of a chain of conditions and a first non-executed condition obtained in the chain of conditions extraction step 34 from the trace in Figure 16a.
Figure 17 shows an embodiment of an automated software testing system.

### DETAILED DISCLOSURE OF THE INVENTION

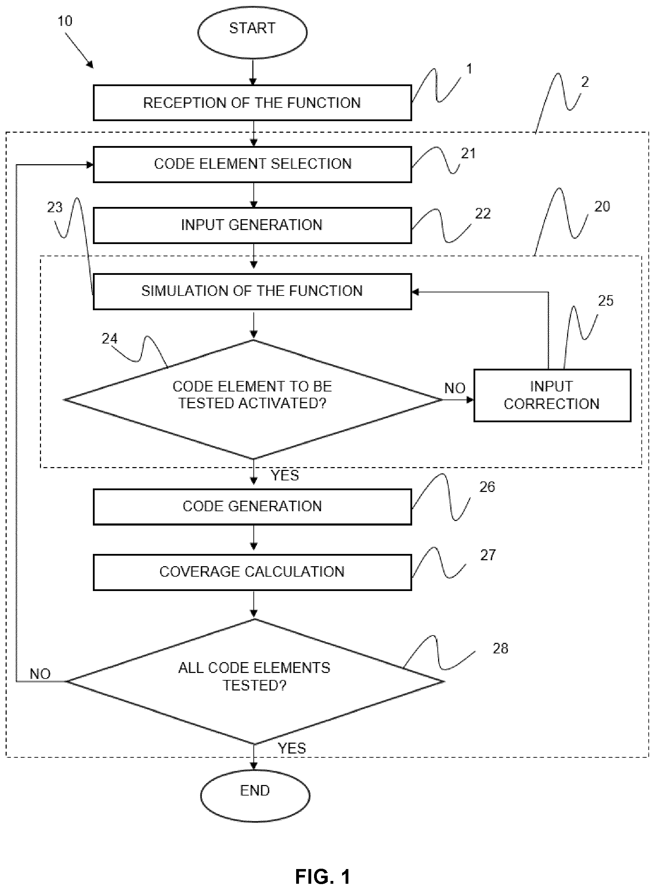

Figure 1 shows a flow diagram of a first embodiment of the computer-implemented method of the invention.

The computer-implemented method 10 of the invention for generating unit tests of a function comprises a receiving step 1, wherein the source code of the function is received, the function comprising at least one parameter and a plurality of lines of code. In the context of the invention the term function is used to refer to a software unit, piece of software or software component whose source code is provided to the method of the invention. Each parameter of the function may be assigned a value from among one or more possible values. The computer-implemented method 10 comprises an iterative unit test generation step 2 following the receiving step 1, wherein a plurality of unit tests are generated for the function.

The iterative unit test generation step 2 comprises a selection step 21, wherein a code element to be tested is selected from the source code. In each iteration of the iterative unit test generation step 2, the code element to be tested in that iteration is first selected, and then the unit test configured to test that code element to be tested is generated, such that the code element to be tested in each iteration is a different code element to be tested from the code elements to be tested selected in the previous iterations.

In the context of the invention, a code element to be tested is a line of code, a boolean atomic subexpression, or any combination of both. The code elements to be tested to be selected in the selection step 21 depend on the coverage metric used in the method, since each coverage metric defines its own code elements to be tested. In order to indicate which is the code element to be tested to an LLM, the method of the invention transforms the code element to be tested into a character string that textually describes the code element to be tested, said character string being the one provided to the LLM. Next, some examples of the different types of coverage metrics known in the prior art are shown below:
- In an instruction or statement coverage metric, the elements to be tested are the lines of code of the function. Next, an example of a text string indicating to the LLM the line of code to be tested is shown: "Pending activation of line 16".
- In a condition coverage metric the code elements to be tested are the atomic boolean subexpressions associated with a conditional statement ("if", "while", "for", "switch", etc.) pending activation. An atomic boolean subexpression is a boolean expression that can be evaluated as true or false, and that cannot be subdivided into simpler boolean expressions. Next, an example of a text string indicating to the LLM a code element to be tested for a condition coverage metric is shown: "At line 102 in the condition "if (a > 10) or (x < a):" the boolean subexpression (a > 10) remains to be tested in case it evaluates to true".

However, the coverage metric used is not intended to be a limitation to the invention, and any coverage metric known in the prior art may be used.

In one embodiment of the invention, the code elements to be tested are obtained from an external program configured to measure the coverage of the function and to provide a list of code elements to be tested, said external program using a given coverage metric.

In the context of the invention the expression activate a code element refers to that code element being executed or evaluated when executing or simulating the execution of the function. Thus, when the code element to be tested is a line of code, it refers to executing the code statement in said line of code, and when the code element to be tested is a boolean atomic subexpression, it refers to evaluating to true or false said boolean atomic subexpression.

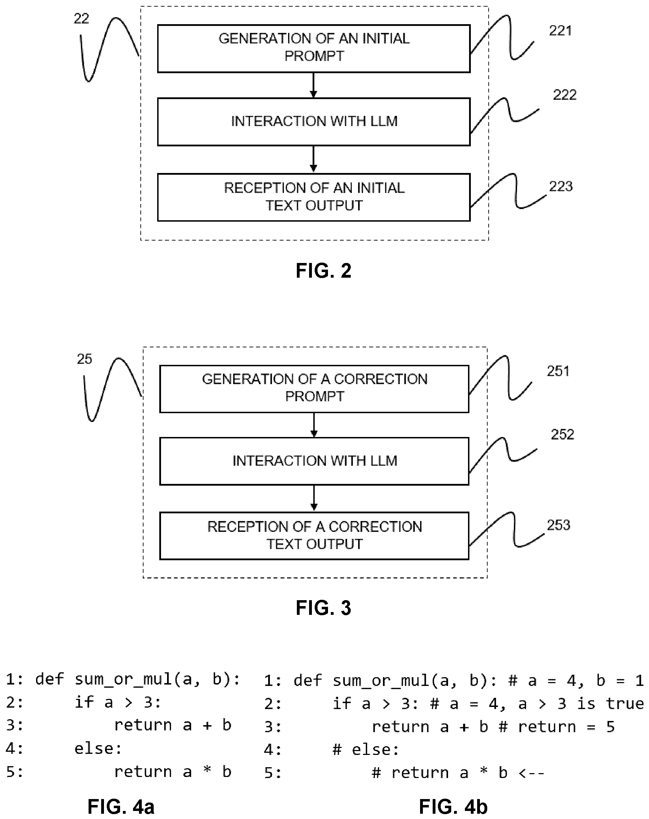

Each unit test of a function includes a call to that function in which a value is given to each parameter of the function so that the function can be executed. Therefore, for the generation of each unit test it is necessary to identify and assign a value to each parameter of the function, so that the unit test can be executed. Thus, once the code element to be tested has been selected, the iterative unit test generation step 2 comprises an input generation step 22 following the selection step 21, wherein an initial value for each parameter of the function is generated using a Large Language Model, or LLM. Figure 2 shows a flow diagram with the detail of the input generation step 22.

An LLM, or Large Language Model, is a generative model that can be used to process natural language (NL) content and/or other inputs such as code, etc., to generate output in natural language (NL) and/or in other formats, such as code, etc., that responds to the inputs provided to it. Among other known uses, an LLM may be used to carry out tasks, instructions, or operations, such that, once carried out, it provides an output or result of said tasks. To do this, it is necessary to provide the LLM with the tasks to be carried out by means of a natural language text message or prompt. Additionally, in said prompt, the LLM can be provided with additional information to carry out said tasks. LLMs are also known to be used to generate precise answers to questions formulated on a large amount of input data. Multiple LLMs such as OpenAI's GPT-2, GPT-3, or GPT-4, OPT, Meta's LLAMA or Galactica, Google's LaMDA or Gemini, etc. are currently known. However, the LLM used in the invention is not intended to be a limitation of this, and any LLM known in the prior art that has been trained to operate in instruction mode, and that is capable of interpreting the programming language in which the source code of the function is programmed may be used.

The input generation step 22 comprises an initial prompt generation step 221, wherein an initial prompt is generated based on the source code of the function and the code element to be tested, a step of interaction with an LLM 222, wherein the LLM is provided with the initial prompt and is requested to return an initial value for each parameter of the function that activates the code element to be tested, and an initial text output reception step 223, wherein an initial text output containing the initial value for each parameter of the function is received from the LLM.

In the context of the invention, text messages or prompts are instructions or text inputs that are provided to the LLM, and which are used to guide the behaviour and the output generated by said LLM. In essence, the text messages or prompts provide the LLM with information about the task to be performed and/or the type of response to be expected. At the same time, the LLM also generates a text output in response to the given text message or prompt.

By providing the initial prompt to the LLM at the step of interaction with an LLM 222, the LLM will have the information on both the source code of the function, and which code element to be tested, and can use it to generate the initial text output.

The tasks that the LLM is requested to perform in the step of interaction with an LLM 222 are included as a text in the initial prompt, such that the initial prompt comprises said tasks, and the information provided to the LLM to perform them, i.e. the source code of the function, and the code element to be tested.

In one embodiment of the method, in the step of interaction with an LLM 222 the LLM is requested to perform the following consecutive tasks:
- it is first requested to locate the code element to be tested within the source code of the function,
- then it is requested to analyse how the code element to be tested can be activated, and
- finally, it is requested to find a correct value for each parameter of the function that activates the code element to be tested, that value being the initial value for said parameter.

When the function is simple, the LLM is able to locate a correct initial value for each parameter that causes the code element to be tested to be activated when the unit test is executed by assigning to each parameter the respective initial value. However, in complex functions it is likely that the initial values of the parameters do not activate the code element to be tested.

The iterative unit test generation step 2, following the input generation step 22, comprises an iterative sequence of validation steps 20 that terminates when it is determined that the code element to be tested has been activated. Said iterative sequence of validation steps 20 comprises a simulation step 23, wherein the execution of the function is simulated by assigning to each parameter of the function a simulation value, and a trace of the execution of the function is generated, the simulation value being initially the initial value of each parameter. The iterative sequence of validation steps 20 comprises an activation check step 24 following the simulation step 23, wherein it is determined whether the code element to be tested has been activated in the simulation step 23, and an input correction step 25 which is performed after the activation check step 24 if in said activation check step 24 it is determined that the code element to be tested has not been activated in the simulation step 23.

The input correction step 25 comprises a correction prompt generation step 251, wherein a correction prompt is generated based on the source code of the function, the code element to be tested, the simulation values, and the trace obtained in the simulation step 23, a step of interaction with the LLM 252, wherein the LLM is provided with the correction prompt and is requested to return a corrected value for each parameter of the function that activates the code element to be tested, and a correction text output reception step 253, wherein a correction text output containing the corrected value for each parameter of the function is received from the LLM, such that upon receipt of the correction text output, the simulation value of each parameter is updated with the respective corrected value and the method returns to the simulation step 23. Figure 3 shows a flow diagram with the detail of the input correction step 25.

In one embodiment of the method, in the step of interaction with the LLM 222 the LLM is requested to perform the following tasks:
- it is first requested to locate the code element to be tested within the source code of the function,
- then it is requested to analyse how the code element to be tested can be activated,
- then it is requested to analyse the trace provided to it in the correction prompt and is asked to find out why the code element to be tested has not been activated with the simulation values,
- next, it is asked to find a solution to the problem that the code element to be tested has not been activated in the simulation step 23, and
- finally, it is asked to find a value for the parameters that activate the code element to be tested, said value being the corrected value for said parameter.

The tasks requested to the LLM in the input correction step 25 are included as a text in the correction prompt, such that said correction prompt comprises said tasks, and the information provided to the LLM to perform them, i.e. the source code of the function, the code element to be tested, the simulation values, and the trace obtained in the simulation step 23.

Each time the method of the invention is performed for a new code element to be tested, the method tries to obtain an initial value for each parameter of the function in the input generation step 22, such that said initial value is a correct value. In the context of the invention, correct values for the parameters are those that activate the code element to be tested for which such values are being obtained. If the code element to be tested is activated when simulating the execution of the function by assigning to each parameter a simulation value equal to the initial value, it is not necessary to execute the input correction step 25, but the method directly proceeds to the code generation step 26. However, if the code element to be tested is not activated when simulating the execution of the function with a simulation value equal to the initial value, the method of the invention performs the input correction step 25 to try to obtain a corrected value for each parameter that does activate the code element to be tested. For that purpose, and given that the simulation step 23 has already been performed with the simulation values equal to the initial values obtaining an execution trace, the method provides said trace and said simulation values to the input correction step 25 so that the LLM has more information with which to obtain corrected values for the parameters. Once the input correction step 25 is completed, the simulation value of each parameter is updated with the respective corrected value obtained in the input correction step 25, and the simulation step 23 is performed again, the execution of the function being simulated by assigning to each parameter the respective simulation value, which has been updated to the corrected value obtained in the input correction step 25, and the execution trace is obtained. If it is determined that the code element to be tested has not been activated in this last execution of the simulation step 23, the input correction step 25 is performed again, providing it with the simulation values assigned to the parameters and the trace obtained in this last execution of the simulation step 23.

That is, in the first iteration of the iterative sequence of validation steps 20 for a code element to be tested, the simulation values assigned to the parameters in the simulation step 23 are the initial values obtained in the input generation step 22, while in the remaining iterations said simulation values are the corrected values obtained in the input correction step 25 of the previous iteration. However, the simulation values and the trace provided to the input correction step 25 in a given iteration are the simulation values assigned to the parameters and the trace obtained in the simulation step 23 of the same iteration of said iterative sequence of validation steps 20.

In one embodiment, the method has a maximum number of possible iterations per code element to be tested, such that, if the maximum number of possible iterations is reached, the method identifies the code element to be tested as an unreachable code element, and proceeds to execute the selection step 21 by selecting another code element to be tested, and thus continue with the generation of unit tests of the untested code elements.

The iterative unit test generation step 2 comprises a code generation step 26 which is performed after the iterative sequence of validation steps 20, wherein the source code of the unit test for the code element to be tested is generated. In said generated source code a function call is implemented, wherein each parameter is assigned the value for which it has been determined in the activation check step 24 that the code element to be tested has been activated, such that the function can be executed and can reach the code element to be tested selected in that unit test.

In one embodiment of the method, when executing or simulating the execution of the function, the function may return one or more output values, such that said output values may be provided as an output or return value provided by the function, as values of one or more output parameters of the function, as values of one or more external variables whose value is changed during the execution of the function, and/or as one more input parameters of an additional function called from the function.

In one embodiment of the method, the source code of the unit test generated in the code generation step 26 comprises, after the function call, a validation block in which it is checked whether the output value or values returned by the function when executed correspond to the output value or values expected for the execution of the function with the values assigned to the parameters in said unit test.

In one embodiment of the method of the invention, the source code of the generated unit test is programmed in Python. However, in other embodiments of the invention, said source code may be generated in another programming language.

The iterative unit test generation step 2 comprises a code coverage calculation step 27 following the code generation step 26, where the coverage of the function is calculated. The coverage of a function is a quality metric that assesses whether the generated unit tests test the code of the function, and the amount of this code tested when the generated unit tests are executed. Ultimately, test coverage is a beneficial tool to identify untested parts of the source code of a software. It allows monitoring the quality of unit tests and indicates the need to create additional unit tests to test the unsecured or untested areas. Different metrics are known to calculate the coverage of the source code of a function or a piece of software, such as Statement Coverage, Condition Coverage, Branch Coverage, MCDC, etc. However, the coverage metric used by the method of the invention is not intended to be a limitation of it, and any coverage metric known in the prior art can be used.

In one embodiment of the method, in the code coverage calculation step 27 an external program configured to measure the coverage of a function is called, and it is requested to measure the coverage of the function and provide both the coverage measure and the list of code elements to be tested.

Finally, the method of the invention comprises a code coverage check step 28, wherein it is determined whether all code elements of the function have been tested, such that, if there remain code elements to be tested in addition to those code elements already identified as not reachable in previous iterations of the method, the selection step of the code element to be tested 21 is then performed another code element to be tested being selected.

Identifying the correct values for the parameters of a function is a mathematically complex task. The method of the invention is characterised by the way in which it identifies the correct values for said parameters. To do so, the method initially interacts with an LLM to obtain initial values, and in case said initial values are not correct, it iterates by requesting the LLM to obtain corrected values, until correct corrected values are found. In these iterations the method provides the LLM with the simulation values used and the trace obtained in the previous simulation, and requests the LLM to think about the values chosen in the previous simulation, in order to obtain values for the parameters that activate the code element to be tested. The values obtained by using the LLM according to the method of the invention are values much more similar to those that would have been chosen by a human developer than those obtained by other methods for generating unit tests known in the prior art. This makes the unit tests generated by means of the method of the invention much more readable and maintainable than those generated using said other methods.

In one embodiment of the method of the invention, each parameter of the function is an input parameter of the function, an external variable of a program comprising the function, or an output value of an additional function which is called from the function.

Input parameters provide data to a function, i.e. they are input variables of a function through which input data is provided to that function.

In one embodiment of the invention, the function forms part of a program or software, which may comprise, in addition to said function, additional functions. In said embodiment the program comprises at least one external variable to the function. In the context of the invention, an external variable is a variable declared in the program outside the source code of the function, its value being accessible from the function. That is to say, the external variable is one that is defined outside the body of the function, and whose scope is all the functions that make up the program, in such a way that any of these functions can access the external variable to read or write to it. In order to generate the unit test of the function, in the case where said function accesses external variables, it is necessary to identify a correct value for each external variable whose value is accessed by the function.

In one embodiment of the invention, the function calls an additional function, receiving from said additional function an output data when said additional function is executed. In one embodiment of the invention the additional function forms part of the same program comprising the function. In other embodiments, the additional function may be contained in a library accessible from the function. In order to be able to generate the unit test of the function, in the case where the function calls additional functions, it is necessary to identify a correct value for the output data provided by the additional function when executed.

In one embodiment of the method of the invention, the trace generated in the simulation step 23 comprises:
- the lines of code executed in the simulation step 23, in the order of execution,
- the lines of code not executed in the simulation step 23, and
- for each of the executed lines of code, the value that the parameters referenced in that line of source code have after the execution of said line of code in the simulation of the execution of the function carried out in the simulation step 23.

In one embodiment of the invention, the trace generated in the simulation step 23 comprises for each of the executed lines of code, the value returned by the function, if the value returned by the function is calculated in said line of code.

In one embodiment of the method, the trace generated in the simulation step 23 comprises, for each executed condition, the value of the condition in that execution. For example, in the case of an "if" statement, the trace comprises the value true or false depending on whether the condition is true or false in the execution of the function.

Figure 4a shows an example of the source code of a function implemented in the Python programming language. The function comprises two parameters, the input parameters "a" and "b" of the function. Figure 4b shows an example of a trace generated in the simulation step 23 when simulating the execution of the function of Figure 4a for the value "4" of parameter "a", and the value "1" of parameter "b". In said example, the lines not executed in the simulation are preceded by the symbol "#", while executed lines are not preceded by said symbol. The "#" symbol is used in Python to mark comments in the code. In addition, the code element to be tested is indicated by the symbol "<--". In the embodiment of Figure 4b, the code element to be tested is line number five of the trace. Additionally, those lines of code where a parameter is referenced are followed by the symbol "#" and the value of each of said parameters upon execution of that line of code, and/or the value returned by the function, if the value returned by the function is calculated in said line of code, and/or the value of the condition, if there is a condition in that line of code.

In one embodiment of the method of the invention, the function comprises at least one internal variable, and the trace comprises, for each of the executed lines of code, the value that the internal variables referenced in said line of source code have after the execution of said line of source code in the simulation of the execution of the function carried out in the simulation step 23. In the context of the invention an internal variable is a variable whose scope is restricted to the function in which it has been declared. Internal variables are also referred to as local variables. This implies that the internal variable will only be accessible in said function, therefore, the internal variable will only be accessible for reading or writing to it from the function in which it has been declared.

In one embodiment of the method of the invention, the iterative sequence of validation steps 20 comprises a compression step 30 after the activation check step 24 and before the input correction step 25, wherein from the trace generated in the simulation step 23 a compressed trace is generated that is provided to the input correction step 25. The compressed trace is used in the correction prompt generation step 251 in place of the trace generated in the simulation step 23.

By means of the compression step 30 the method of the invention reduces the size of the trace to a suitable size manageable by the LLM in the subsequent input correction step 25, making it simpler for the LLM to obtain corrected values for the parameters.

In one embodiment of the method of the invention, the compression step 30 comprises a loop compression step 31 wherein the trace generated in the simulation step 23 is compressed by removing information regarding the execution of loops, and the compressed trace is obtained, or a trace compression step 32. The trace compression step 32 comprises a compression prompt generation step 321, wherein a compression prompt is generated based on the source code of the function, the code element to be tested, the simulation values, and the trace generated in the simulation step 23, a step of interaction with the LLM 322, wherein the LLM is provided with the compression prompt and is requested to identify and remove non-relevant information from the trace, and a compression text output reception step 323, wherein a compression text output containing the compressed trace is received from the LLM.

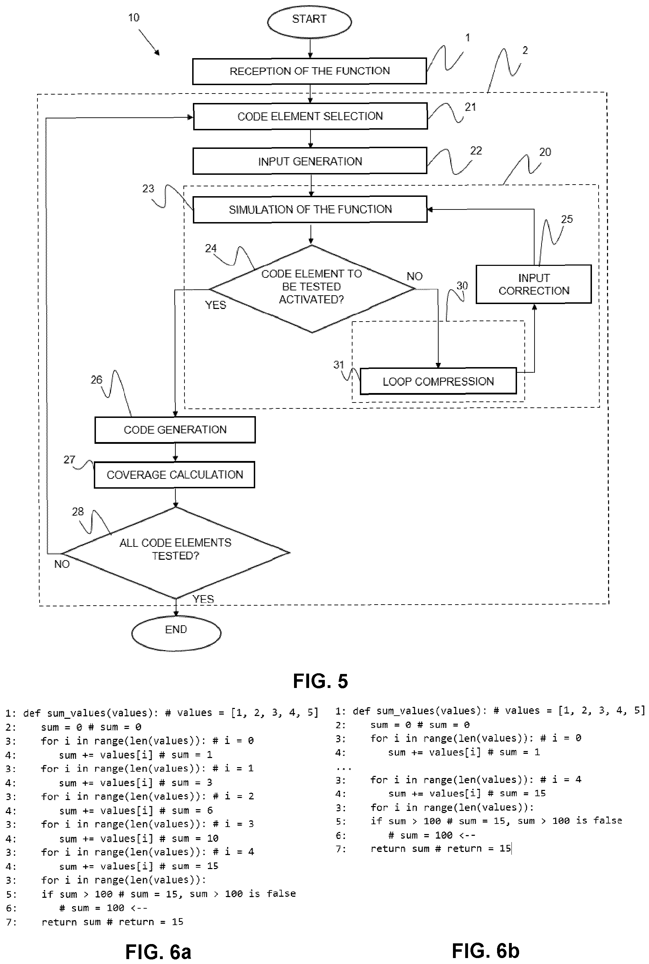

Figure 5 shows a second embodiment of the method, wherein the compression step 30 comprises a loop compression step 31 wherein the trace generated in the simulation step 23 is compressed by removing information regarding the execution of loops, and the compressed trace is obtained. That is to say, in this embodiment of the method, in each iteration of the iterative sequence of validation steps 20, in the loop compression step 31 the trace generated in the simulation step 23 of that same iteration is compressed.

Figure 6a shows an example of a trace generated in the simulation step 23 when simulating the execution of a function called "sum_values". The function comprises one parameter, the input parameter "values", which is an array of five numbers. Additionally, the function has two internal variables called "sum" and "i". In this trace, as in the trace shown in Figure 4b, the lines not executed in the simulation are preceded with the symbol "#", while executed lines are not preceded with said symbol. In addition, the code element to be tested is indicated by the symbol "<--". Additionally, those lines of code in which reference is made to a parameter or internal variable of the function, or those in which the value returned by the function is calculated, are followed by the symbol "#" and the value of each of said parameters and/or internal variables, and/or the value returned by the function once said line of code has been executed. The "sum_values" function has an iterative structure, a "for" loop, which is executed as many times as values in the array of the "values" parameter. In the embodiment of the trace shown in Figure 6a each iteration of said iterative structure is shown. Figure 6b shows an example of the compressed trace generated in the loop compression step 31 from the trace in Figure 6a, from which the lines of code corresponding to the intermediate iterations of the "for" loop of the function have been removed, the lines of code executed corresponding to the first and last iterations of the "for" loop being kept, and those corresponding to the intermediate iterations being replaced by the ellipsis symbol.

In the loop compression step 31 repeated patterns are identified in the lines of the trace. By means of the compression of loops the method of the invention reduces the size of the trace to a suitable size manageable by the LLM in the subsequent input correction step 25, making it simpler for the LLM to obtain corrected values for the parameters.

In order to avoid that in the case of an infinite loop the simulation step 23 remains simulating the function indefinitely, in one embodiment of the method of the invention, a predetermined maximum trace size is set in the simulation step 23, such that if the trace generated in said simulation step 23 exceeds the predetermined maximum trace size, the simulation step 23 ends and proceeds to the activation check step 24, wherein it is determined whether the code element to be tested has been activated or not from the incomplete trace generated in the simulation step 23. The method of the invention is particularly advantageous in cases where it enters an infinite loop in the simulation step 23, as it allows compressing the trace generated by the infinite loop to a suitable size that can be managed by the LLM in the subsequent input correction step 25. Furthermore, it allows identifying the existence of said infinite loop in the generated compressed trace, which when provided to the input correction step 25 allows the LLM to analyse the reasons why an infinite loop has been entered in the previous simulation step 23, and to find corrected values for the parameters that avoid an infinite loop in a subsequent simulation.

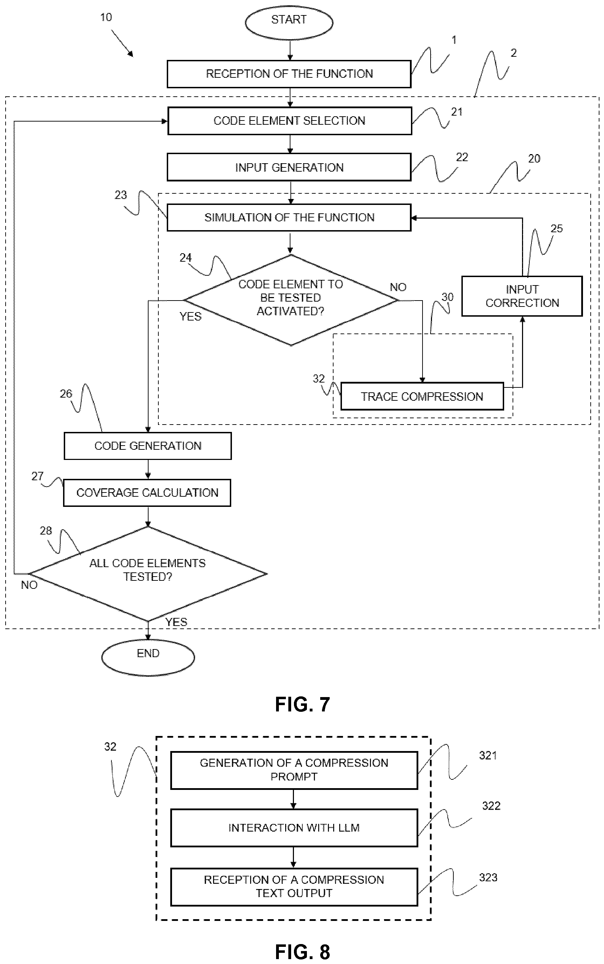

Figure 7 shows a third embodiment of the method, wherein the compression step 30 comprises a trace compression step 32 wherein the trace generated in the simulation step 23 is compressed. Figure 8 shows a flow diagram with the detail of the trace compression step 32. In each iteration of the iterative sequence of validation steps 20, the compression prompt comprises the trace generated in the simulation step 23 of the same iteration, which is provided to the LLM in the step of interaction with the LLM 322 so that the LLM can identify non-relevant information in the trace and remove it. The compression prompt further comprises the tasks requested to the LLM in the trace compression step 32.

In one embodiment of the method, in the step of interaction with the LLM 322, the LLM is requested to perform the following tasks:
- it is first requested to identify the non-relevant information in the trace, and
- then it is requested to remove said non-relevant information from the trace.

By means of the trace compression step 32 the method of the invention uses the LLM to compress the traces by removing non-relevant information. Thus, it reduces the size of the trace to a suitable size manageable by the LLM in the subsequent input correction step 25, making it simpler for the LLM to obtain corrected values for the parameters.

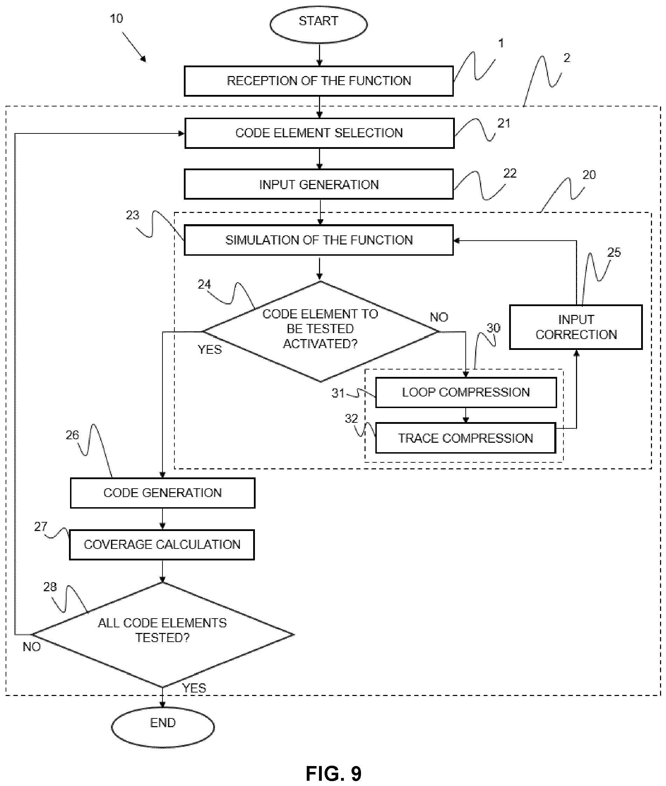

In a fourth embodiment of the method of the invention shown in Figure 9, the compression step 30 comprises a loop compression step 31, wherein the trace generated in the simulation step 23 is compressed by removing information regarding the execution of loops in the source code and an intermediate compressed trace is obtained, and a trace compression step 32. The trace compression step 32 comprises a compression prompt generation step 321, wherein a compression prompt is generated based on the source code of the function, the code element to be tested, the simulation values, and the intermediate compressed trace, a step of interaction with the LLM 322, wherein the LLM is provided with the compression prompt and is requested to identify and remove non-relevant information from the intermediate compressed trace, and a compression text output reception step 323, wherein a compression text output containing the compressed trace is received from the LLM, the compressed trace being provided to the input correction step 25. In this embodiment of the method, in each iteration of the iterative sequence of validation steps 20, in the loop compression step 31 the trace generated in the simulation step 23 of that same iteration is compressed obtaining an intermediate trace, and in the trace compression step 32 the intermediate trace generated in the loop compression step 31 of said same iteration is compressed, obtaining the compressed trace provided to the input correction step 25.

In another embodiment of the computer-implemented method of the invention, the iterative sequence of validation steps 20 comprises an equation management step 33 between the activation check step 24 and the input correction step 25.

The equation management step 33 comprises an equation generation step 331 comprising an equation generation prompt generation step 3311, wherein an equation generation prompt is generated based on the source code of the function, the code element to be tested, the simulation values, and the received trace.

The equation generation step 331 comprises a step of interacting with the LLM 3312 following the equation generation prompt generation step 3311, wherein the LLM is provided with the equation generation prompt, and is requested to select one of the parameters of the function, to identify a plurality of equations defining the value of said parameter based on the values of the other parameters, and to generate a source code of a script, that provided to an external tool configured to solve mathematical equations, allows to calculate the value of the selected parameter. The equation generation step 331 comprises an equation generation text output reception step 3313 following the step of interaction with the LLM 3312, wherein an equation generation text output containing the source code of said script is received from the LLM. The script comprises a plurality of instructions for solving the plurality of equations. The instructions are adapted to be executed by the external tool.

The equation management step 33 comprises an equation solution step 332 following the equation generation step 331, wherein the external tool is provided with the source code of the script generated in the equation generation step 331 and is requested to execute the script.

The equation management step 33 comprises a result reception step 333 following the equation solution step 332, wherein the result obtained when executing the script is received from the external tool.

The equation management step 33 comprises a report generation step 334 following the result reception step 333, comprising a report generation prompt generation step 3341, wherein a report generation prompt is generated based on the source code of the function, the code element to be tested, the simulation values, the received trace, the source code of the script, and the result received from the external tool. The report generation step 334 comprises a step of interaction with the LLM 3342 following the report generation prompt generation step 3341, wherein the LLM is provided with the report generation prompt, and is requested to generate a report on the result obtained from the external tool, and a report generation text output reception step 3343, wherein a report generation text output containing said report is received from the LLM, such that in the input correction step 25, the correction prompt is also generated based on said report.

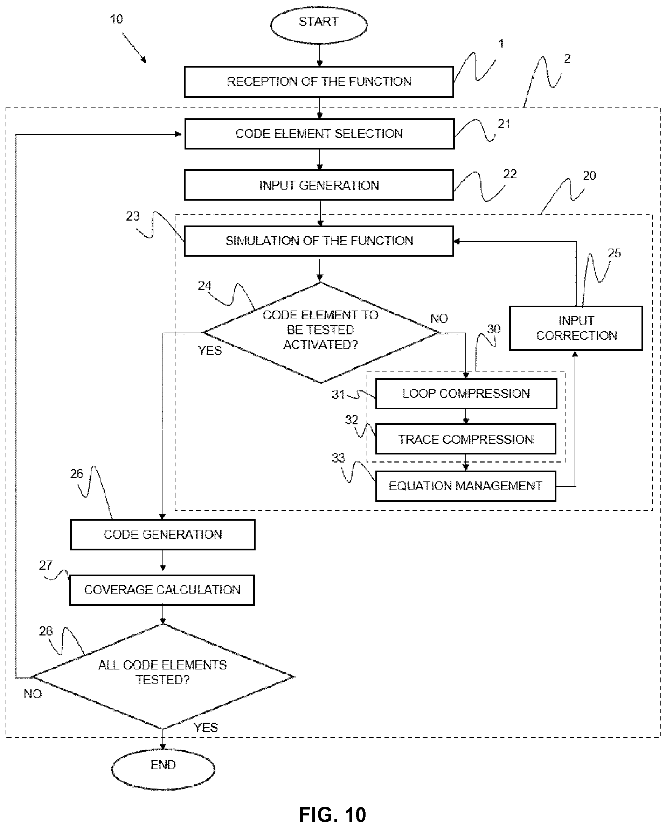

Figure 10 shows a fifth embodiment of the computer-implemented method of the invention, wherein the equation management step 33 is performed between the activation check step 24 and the input correction step 25, namely after the compression step 30 and before the input correction step 25. In the fifth embodiment, the compression step 30 comprises the loop compression step 31 and the trace compression step 32, which is performed following the loop compression step 31, the equation management step 33 being performed following the trace compression step 32. In said embodiment the received trace in the equation management step 33 is the compressed trace generated in the compression step 30, specifically in the trace compression step 32.

In another embodiment of the method, the equation management step 33 is performed following the compression step 30, which only comprises the loop compression step 31. In said embodiment the received trace in the equation management step 33 is the compressed trace generated in the loop compression step 31.

In another embodiment of the method, the equation management step 33 is performed following the compression step 30, which only comprises the trace compression step 32. In said embodiment the received trace in the equation management step 33 is the compressed trace generated in the trace compression step 32.

In another embodiment of the method, the equation management step 33 is performed following the activation check step 24, the received trace in the equation management step 33 being the trace generated in the simulation step 23, wherein said equation management step 33 may or may not be followed by a compression step 30.

In one embodiment of the method, at the step of interaction with the LLM 3342, the LLM is requested to perform the following tasks:
- it is first requested to analyse the received trace,
- next it is requested to analyse the result provided by the external tool, and
- then it is requested to write a report with the result.

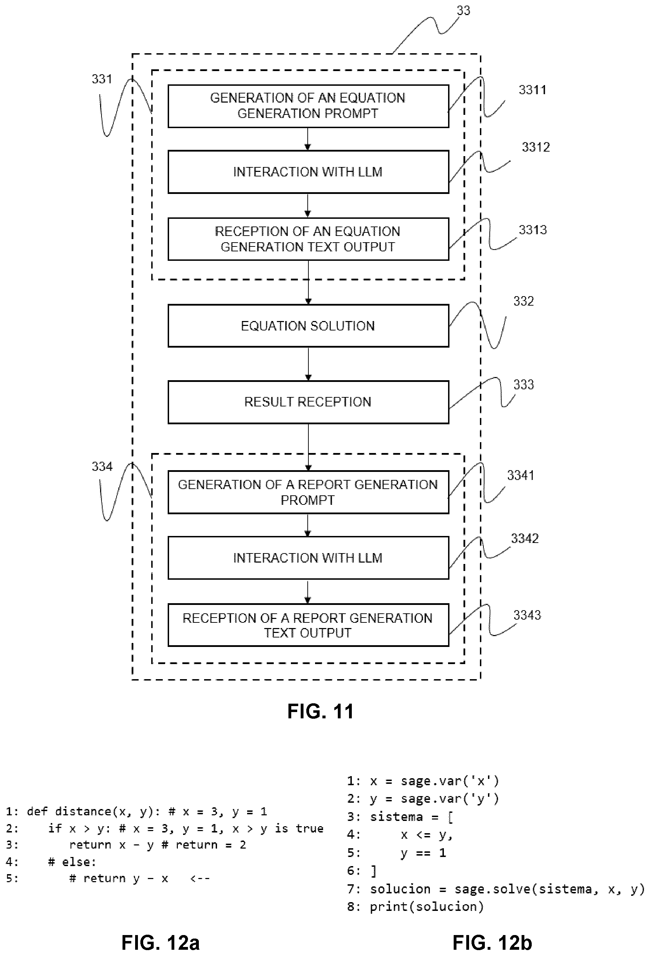

The tasks requested to the LLM in the report generation step 334 are included as a text in the report generation prompt, such that the report generation prompt comprises those tasks, and the information provided to the LLM to perform them, i.e. the source code of the function, the code element to be tested, the simulation values, the received trace, the source code of the script, and the result received from the external tool. Figure 11 shows a flow diagram with the detail of the equation management step 33.

In one embodiment of the method, the external tool to which in the equation solution step 332 the source code of the script generated in the equation management text output reception step 3313 is provided is Mathematica, Matlab, SageMath, or another tool known in the prior art configured to solve mathematical equations.

The method of the invention is particularly advantageous for creating unit tests of complex functions wherein the value of one parameter of the function depends mathematically on other parameters or internal variables of the function, and in which it is necessary to perform complex calculations to find correct values for the parameters. The method of the invention uses the LLM to generate a script with the equations to be solved, so that said script can be solved in the external tool. Furthermore, once the result of the execution of the script in the external tool has been received, the method of the invention uses the LLM again to generate a report with the result obtained, a report that will subsequently be provided to the input correction step 25, so that the LLM can also use the information in said report to obtain corrected values for the parameters of the function. For that purpose, the LLM used by the method of the invention must support the programming language in which it is requested to generate the script, that is to say, it must be able to generate a script adapted to be executed in the mathematical problem resolution external tool used by the method.

Figure 12a shows an example of a trace provided to the equation generation prompt generation step 3311. Said trace indicates that the code element to be tested is line number 5 of said trace, which will be executed in the case where the parameter "x" has a value less than or equal to the value of the parameter "y".

Figure 12b shows an example of a Python script using the SageMath library generated by the LLM at the equation management text output reception step 3313, when it is provided with the trace of Figure 12a in the equation generation prompt. In this example, the LLM has selected the parameter "x", and has identified a plurality of equations by which to obtain the value of "x" as a function of the other parameters of the function, in this example, the parameter "y". Next, the LLM has generated the source code of a script, shown in Figure 12b, which, provided to an external tool, allows to calculate the value of the parameter "x". In other embodiments of the invention, the script can be generated in other programming languages.

When providing the script in Figure 12b to the Python interpreter with SageMath and requesting it to run the script, the Python interpreter returns a result for the parameter "x", e.g. "x <= 1".

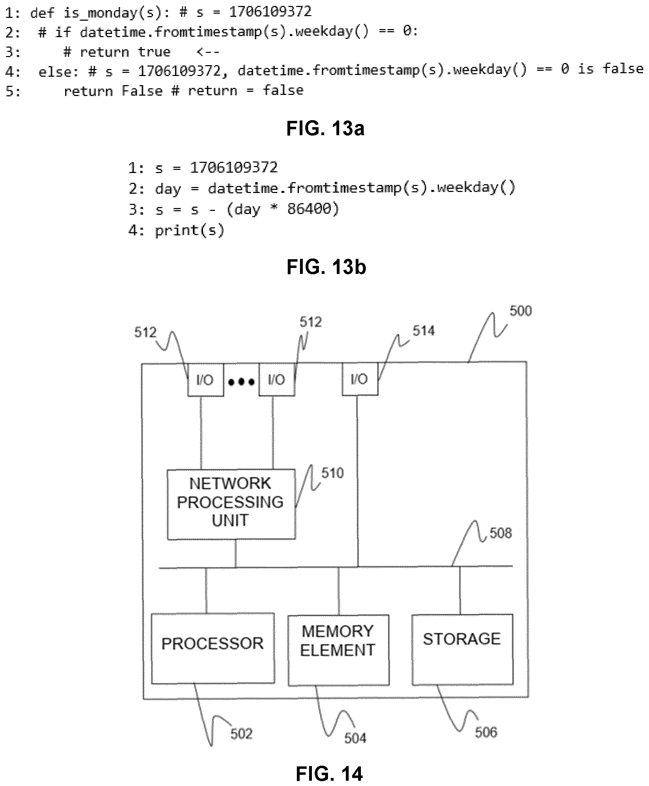

Figure 13a shows an example of a trace provided to the equation generation prompt generation step 3311. Said trace indicates that the code element to be tested is line number 3 in the source code of the function, which will be executed in the case where the parameter "s" has a value equal to the number of seconds from 1 January 1970 to a Monday.

Figure 13b shows an example of a Python script generated by the LLM at the equation management text output reception step 3313 when it is provided with the trace of Figure 13a in the equation generation prompt. In other embodiments of the invention, the script may be generated in other programming languages.

By providing the script in Figure 13b to the Python interpreter and requesting it to execute the script, the Python interpreter returns the result obtained when executing the script, which would be a number of seconds corresponding to a date falling on a Monday.

In one embodiment of the method of the invention, in the equation generation prompt generation step 3311 the equation generation prompt is generated based also on the parameters selected in the equation generation step 331 in previous iterations of the iterative sequence of validation steps 20 for the same function and the same code element to be tested, and wherein in the step of interaction with the LLM 3312 the LLM is requested to select a parameter other than the parameter selected in said previous iterations.

In complex functions where more than one parameter of the function can be expressed mathematically as a function of the values of the other parameters, the method of the invention is particularly advantageous, since it is not limited to solving the equations relating to the expression of one of the parameters as a function of the others, but in case it does not generate correct values with the result obtained from the external tool for said parameter, in subsequent iterations it could try with another different parameter.

In another embodiment of the computer-implemented method of the invention, the iterative sequence of validation steps 20 comprises a chain of conditions extraction step 34 between the activation check step and the input correction step 25.

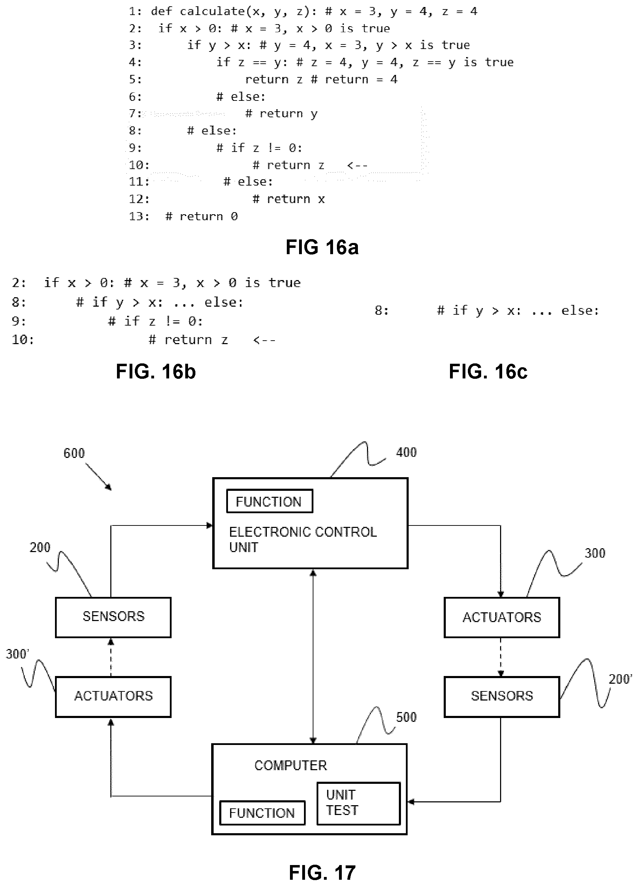

In the chain of conditions extraction step 34, starting from the received trace, a chain of conditions that have to be executed until the code element to be tested is reached is obtained, so that in the input correction step 25, the correction prompt is also generated based on said chain of conditions. The chain of conditions comprises the conditions of the source code of the function that have to be evaluated as true during the execution of the function in order for the code element to be tested to be executed. Figure 16a shows an example of a trace, and Figure 16b shows an example of a chain of conditions obtained in the chain of conditions extraction step 34, starting from the trace in Figure 16a.

In one embodiment of the method, in the chain of conditions extraction step 34, the first unexecuted condition of said chain is also obtained, such that in the input correction step 25, the correction prompt is also generated based on said first unexecuted condition. Figure 16c shows an example of a first unexecuted condition obtained in the chain of conditions extraction step 34 from the trace of Figure 16a.

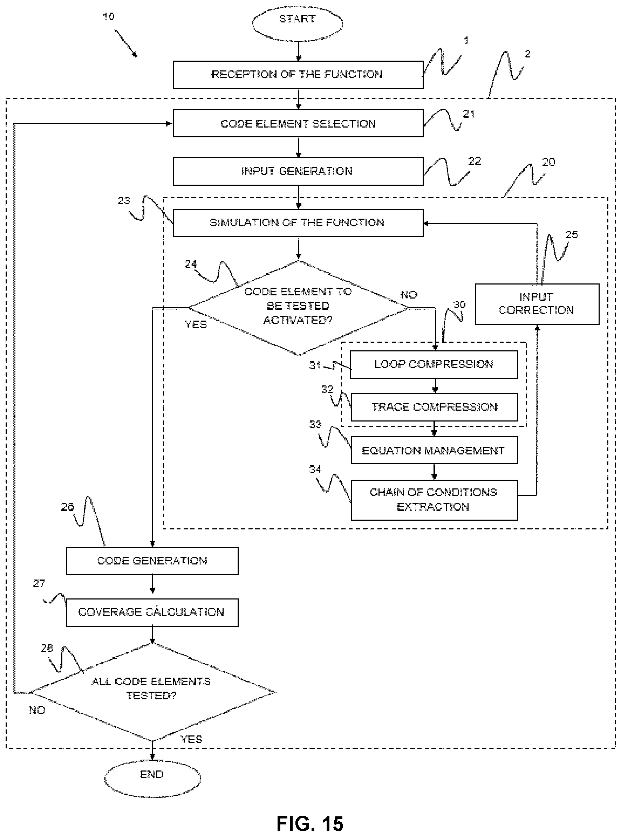

Figure 15 shows a sixth embodiment of the computer-implemented method of the invention, wherein the chain of conditions extraction step 34 is performed following the equation management step 33, which in turn is performed following the compression step 30, comprising the loop compression step 31 and the trace compression step 32. In said embodiment, the received trace at the chain of conditions extraction step 34 is the compressed trace generated in the compression step 30, namely in the trace compression step 32. In another embodiment of the method, the chain of conditions extraction step 34 is performed following the equation management step 33, which in turn is performed following the compression step 30, which only comprises the loop compression step 31. In said embodiment, the received trace in the chain of conditions extraction step 34 is the compressed trace generated in the loop compression step 31. In another embodiment of the method, the chain of conditions extraction step 34 is performed following the equation management step 33, which in turn is performed following the compression step 30, which only comprises the trace compression step 32. In said embodiment, the received trace in the chain of conditions extraction management step 34 is the compressed trace generated in the trace compression step 32.

In another embodiment of the invention, the chain of conditions extraction step 34 is performed following the compression step 30, comprising the loop compression step 31 and the trace compression step 32. In said embodiment, the received trace in the chain of conditions extraction step 34 is the compressed trace generated in the compression step 30, namely in the trace compression step 32. In another embodiment of the method, the chain of conditions extraction step 34 is performed following the compression step 30, which only comprises the loop compression step 31. In said embodiment, the received trace in the chain of conditions extraction step 34 is the compressed trace generated in the loop compression step 31. In another embodiment of the method, the chain of conditions extraction step 34 is performed following the compression step 30, which only comprises the trace compression step 32. In said embodiment the received trace in the chain of conditions extraction step 34 is the compressed trace generated in the trace compression step 32.

In another embodiment of the method, the chain of conditions extraction step 34 follows the activation check step 24, the received trace in the chain of conditions extraction step 34 being the trace generated in the simulation step 23, wherein the chain of conditions extraction step 34 may or may not be preceded or followed by an equation management step 33.

In at least one embodiment, the computer 500 or computing device 500 used to implement the method of the invention may include one or more processors 502, one or more memory elements 504, storage 506, a bus 508, one or more network processor units 510 interconnected with one or more network input/output (I/O) interfaces 512, one or more I/O interfaces 514, and a computer program. Figure 14 shows a schematic depiction of an embodiment of the computer 500 configured to implement the method of the invention.

The computer program comprises a plurality of instructions which, when executed by the processor 502 cause the processor 502 to execute the steps of the method of the invention. In at least one embodiment, the processor or processors 502 are at least a hardware processor configured to execute various tasks, operations and/or functions for the computer 500 according to the software and/or the instructions configured for the computer 500, for example, in the computer program.

In at least one embodiment, the memory elements 504 and/or storage 506 are configured to store data, information, software, and/or instructions associated with the computer 500, and/or the logic configured for the memory elements 504 and/or storage 506. In one embodiment of the computer 500, the computer program, and the data, information, software, and/or instructions associated with said computer program are stored in any combination of memory element(s) 504 and/or storage 506.

In one embodiment of the method of the invention, the function is stored in a memory element 504 and/or storage 506.

In one embodiment of the method of the invention, the source code of the unit tests generated for the code elements to be tested of the function are stored in a memory element 504 and/or storage 506.

In at least one embodiment, the bus 508 may be configured as an interface which allows one or more elements of the computer 500 to communicate with each other so as to exchange information and/or data. The bus 508 may be implemented with any architecture designed for exchanging control, data, and/or information between processors, memory/storage elements, peripheral devices, and/or any other hardware and/or software components which may be configured for the computer 500. In at least one embodiment, the bus 508 may be implemented as a rapid interconnection housed in the core, potentially using shared memory between processes (e.g., logic), which may allow efficient communication routes between processes.

In several embodiments, the network processor unit(s) 510 may enable communication between the computer 500 and other systems, entities, etc., through the network I/O interface(s) 512 (wired and/or wireless). In several embodiments, the network processor unit(s) 510 may be configured as a combination of hardware and/or software, as one or more Ethernet controllers and/or interface controllers or cards, driver(s) and/or fibre channel (e.g., optical) controller(s), wireless receivers/transmitters/transceivers, baseband processor(s)/modem(s) and/or other similar network interface driver(s) and/or controller(s) that are now known or may be developed hereinafter so as to allow communications between the computer 500 and other systems, entities, etc. to facilitate the operations for the various embodiments of the method described herein. In several embodiments, the network I/O interface(s) 512 may be configured as one or more Ethernet ports, fibre channel ports, any other I/O port(s) and/or antennas/antenna array(s) that are known now or may be developed in the future. Therefore, the network processor unit(s) 510 and/or the network I/O interface(s) 512 may include interfaces suitable for receiving, transmitting and/or otherwise communicating data and/or information in a network environment.

I/O interfaces 514 allow the input and output of data and/or information with other entities which may be connected to the computer 500. For example, the I/O interfaces 514 may provide a connection to external devices such as a keyboard, keypad, a touch screen, and/or any other suitable device of input and/or output that is known now or may be developed in the future. External devices may also include non-transitory computer-readable storage media such as database systems, USB memories, portable optical or magnetic disks, and memory cards. Still in some cases, the external devices may be a mechanism for displaying data to a user, such as, for example, a computer monitor, display screen, or the like.

In several embodiments, the computer program can include instructions which, when executed, cause the processor or processors 502 to perform operations, which can include, among others, providing general control operations of the computer 500, interacting with other entities, systems, etc. described herein, maintaining and/or interacting with stored data, information, parameters, etc. (e.g., memory element(s), storage, data structures, databases, tables, etc.), combinations thereof, and/or the like to allow the execution of the operations necessary for the implementation of the method of the invention.

In some cases, the computer program of the present embodiments may be available through a non-transitory computer-readable storage medium (e.g., magnetic or optical media, magneto-optical media, CD-ROM, DVD, memory devices, etc.). In some cases, the non-transitory computer-readable storage media may also be removable. Other examples may include optical and magnetic disks, USB memories and smart cards which can be inserted into and/or otherwise connected to a computer to be transferred to another computer-readable storage medium.

In one embodiment, the computer program is executed in a distributed environment, i.e., part of said computer program runs on a first computer 500, and part of the computer program runs on a second computer 500, both computers 500 being communicated with one another.

In one embodiment, the LLM is executed in the computer 500. However, in other embodiments of the method, the LLM may be executed in another computer in communication with the computer 500.

In one embodiment, the external program configured to measure the coverage of a function is executed in the computer 500. However, in other embodiments of the method, the external program may be executed in another computer in communication with the computer 500.

In one embodiment, the external tool configured to solve mathematical equations is executed in the computer 500. However, in other embodiments of the method, the external tool may be executed in another computer in communication with the computer 500.

In a second aspect, the invention also relates to a non-transitory computer-readable storage medium that stores thereon a plurality of computer-readable instructions which, when executed by a computer 500, cause said computer 500 to carry out the steps of the method of the invention.

In a third aspect, the invention also relates to a computer 500 comprising a processor 502, and a computer-readable storage medium operatively coupled to the processor 502, the computer-readable storage medium having a plurality of computer-readable instructions stored therein which, when executed by the processor 502 cause the computer 500 to carry out the steps of the method of the invention.

In a fourth aspect, the invention also relates to an automated software test system 600 based on a Hardware-In-the-Loop (HIL) architecture. By means of said automated software test system 600, the correct functioning of programs and/or functions of an electronic control unit 400, for example, the ECU of an automobile, is verified. Said automated software test system 600 comprises a plurality of sensors 200 or input devices, and a plurality of actuators 300 or devices configured to perform an action. It also comprises an electronic control unit 400 in communication with the sensors 200 and the actuators 300, wherein the program or function to be tested is executed. The automated software test system 600 further comprises a plurality of actuators 300', a plurality of sensors 200', and the computer 500 of the invention, which is in communication with the sensors 200', the actuators 300', and the electronic control unit 400. Each actuator 300' is configured to generate the necessary environment to the associated sensor 200, such that said sensor 200 provides the electronic control unit 400 with a certain value. Similarly, the sensors 200' are configured to detect the action carried out by the associated actuator 300, and translate said detected action into a value, and provide it to the computer 500.

The automated software testing system 600 further comprises an electrical and network system configured to connect the electronic control unit 400 to the sensors 200, the actuators 300, and the computer 500, and to connect the computer 500 to the actuators 300' and the sensors 200'. Figure 17 shows an embodiment of an automated software test system according to the invention.

The computer 500 of the invention is configured to generate the unit tests for the function, each parameter of the function having an associated value in each unit test. For each unit test, the computer 500 is configured to communicate with the actuators 300' such that the sensor 200 associated with each parameter of the function provides the electronic control unit 400 with the value of that parameter in said unit test. The computer 500 of the invention is also configured to request the electronic control unit 400 to execute said function. The electronic control unit 400 is configured to read the value of each sensor 200, and execute the function using the values of the sensors 200 as values of the parameters of the function. Once the function has been executed, the electronic control unit 400 is configured to send a signal to each corresponding actuator 300, said signal being representative of the output value of the function associated with said actuator. The computer 500 is also configured to communicate with the sensors 200', and receive from each of them a value, said value corresponding to an output value of the function.

In one embodiment of the automated software test system 600, the computer 500 is configured to validate whether the values received from the sensors 200', which represent the outputs of the function, correspond to the expected output values of the function.

In one embodiment of the automated software test system 600 of the invention, the sensors 200 may also be digital inputs, said digital inputs can be provided to the electronic control unit, or via a CAN bus, etc. In one embodiment of the automated software test system 600 of the invention, the actuators may also be digital outputs, said digital outputs can be provided via a CAN bus, etc.

## Claims

1. Computer-implemented method for generating unit tests of a function, comprising
- a receiving step (1), wherein the source code of the function is received, the function comprising at least one parameter and a plurality of lines of code, and
- an iterative unit test generation step (2), wherein a plurality of unit tests are generated for the function, comprising
- a selection step (21), wherein a code element to be tested is selected from the source code,
- an input generation step (22), wherein an initial value is generated for each parameter of the function, comprising
- an initial prompt generation step (221), wherein an initial prompt is generated based on the source code of the function and the code element to be tested,
- a step of interaction with an LLM (222), wherein the LLM is provided with the initial prompt and is requested to return an initial value for each parameter of the function that activates the code element to be tested, and
- an initial text output reception step (223), wherein an initial text output containing the initial value for each parameter of the function is received from the LLM,
- an iterative sequence of validation steps (20) that terminates when it is determined that the code element to be tested has been activated, comprising
- a simulation step (23), wherein the execution of the function is simulated by assigning a simulation value to each parameter, and a trace of the execution of the function is generated, the simulation value being initially the initial value,
- an activation check step (24) after the simulation step (23), wherein it is determined whether the code element to be tested has been activated in the simulation step (23), and
- an input correction step (25) which is performed after the activation check step (24) if in the activation check step (24) it is determined that the code element to be tested has not been activated in the simulation step (23), comprising
- a correction prompt generation step (251), wherein a correction prompt is generated based on the source code of the function, the code element to be tested, the simulation values, and the trace obtained in the simulation step (23),
- a step of interaction with the LLM (252), wherein the LLM is provided with the correction prompt and is requested to return a corrected value for each parameter of the function that activates the code element to be tested, and
- a correction text output reception step (253), wherein a correction text output containing the corrected value for each parameter of the function is received from the LLM,
such that, upon receipt of the correction text output, the simulation value of each parameter is updated with the respective corrected value and the method returns to the simulation step (23),
- a code generation step (26) that is performed after the iterative sequence of validation steps, wherein the source code of the unit test for the code element to be tested is generated,
- a code coverage calculation step (27) following the code generation step (26) wherein the coverage of the function is calculated, and
- a code coverage check step (28), wherein it is determined whether all code elements of the function have been tested such that, if any code elements remain to be tested, the selection step (21) is then performed, another code element to be tested being selected.

2. Computer-implemented method according to claim 1, wherein each parameter of the function is
- an input parameter of the function,
- an external variable of a program comprising the function, or
- an output value of an additional function which is called from the function.

3. Computer-implemented method according to claim 1 or 2, wherein the trace comprises
- the lines of code executed in the simulation step (23), in the order of execution,
- the lines of code not executed in the simulation step (23), and
- for each of the executed lines of code, the value that the parameters referenced in said line of code have after the execution of said line of code in the simulation of the execution of the function carried out in the simulation step (23).

4. Computer-implemented method according to claim 3, wherein the function comprises at least one internal variable, and wherein the trace comprises, for each of the executed lines of code, the value that the internal variables referenced in said line of code have after the execution of said line of code in the simulation of the execution of the function carried out in the simulation step (23).

5. Computer-implemented method according to any of the preceding claims, wherein the iterative sequence of validation steps (20) comprises a compression step (30) after the activation check step (24) and before the input correction step (25), wherein from the trace generated in the simulation step (23) a compressed trace is generated that is provided to the input correction step (25).

6. Computer-implemented method according to claim 5, wherein the compression step (30) comprises
- a loop compression step (31) wherein the trace generated in the simulation step (23) is compressed by removing information regarding the execution of loops, and the compressed trace is obtained, or
- a trace compression step (32) comprising
- a compression prompt generation step (321), wherein a compression prompt is generated based on the source code of the function, the code element to be tested, the simulation values, and the trace generated in the simulation step (23),
- a step of interaction with the LLM (322), wherein the LLM is provided with the compression prompt and is requested to identify and remove non-relevant information from the trace, and
- a compression text output reception step (323), wherein a compression text output containing the compressed trace is received from the LLM.

7. Computer-implemented method according to claim 5, wherein the compression step (30) comprises
- a loop compression step (31) wherein the trace generated in the simulation step (23) is compressed by removing information regarding the execution of loops in the source code and an intermediate compressed trace is obtained, and
- a trace compression step (32), comprising
- a compression prompt generation step (321), wherein a compression prompt is generated based on the source code of the function, the code element to be tested, the simulation values, and the intermediate compressed trace,
- a step of interaction with the LLM (322), where the LLM is provided with the compression prompt and is requested to identify and remove non-relevant information from the intermediate compressed trace, and
- a compression text output reception step (323), wherein a compression text output containing the compressed trace is received from the LLM.

8. Computer-implemented method according to any of the preceding claims, wherein the iterative sequence of validation steps (20) comprises an equation management step (33) between the activation check step (24) and the input correction step (25), wherein the equation management step (33) comprises
- an equation generation step (331) comprising
- an equation generation prompt generation step (3311), wherein an equation generation prompt is generated based on the source code of the function, the code element to be tested, the simulation values, and the received trace,
- a step of interaction with the LLM (3312), wherein the LLM is provided with the equation generation prompt and is requested to select one of the parameters of the function and to identify a plurality of equations defining the value of said parameter based on the values of the other parameters, and to generate a source code of a script, that provided to an external tool configured to solve mathematical equations, allows to calculate the value of the selected parameter, and
- an equation generation text output reception step (3313), wherein an equation generation text output containing the source code of said script is received from the LLM,
- an equation solution step (332), wherein the external tool is provided with the source code of the script generated in the equation generation step (331) and is requested to execute said script,
- a result reception step (333), wherein the result obtained when executing the script is received from the external tool, and
- a report generation step (334), comprising
- a report generation prompt generation step (3341), wherein a report generation prompt is generated based on the source code of the function, the code element to be tested, the simulation values, the received trace, the source code of the script, and the result received from the external tool,
- a step of interaction with the LLM (3342), wherein the LLM is provided with the report generation prompt and is requested to generate a report on the result obtained from the external tool, and
- a report generation text output reception step (3343), wherein a report generation text output containing said report is received from the LLM, such that in the input correction step (25), the correction prompt is also generated based on said report.

9. Computer-implemented method according to claim 8, wherein in the equation generation prompt generation step (3311) the equation generation prompt is generated based also on the parameters selected in the equation generation step (331) in previous iterations of the iterative sequence of validation steps (20) for the same function and the same code element to be tested, and wherein in the step of interaction with the LLM (3312) the LLM is requested to select a parameter other than the parameter selected in said previous iterations.

10. Computer-implemented method according to any of the preceding claims, wherein the iterative sequence of validation steps (20) comprises a chain of conditions extraction step (34) between the activation check step (24) and the input correction step (25), wherein starting from the received trace a chain of conditions that have to be executed until the code element to be tested is reached is obtained, such that in the input correction step (25), the correction prompt is also generated based on said chain of conditions.

11. Computer-implemented method according to claim 10, wherein in the chain of conditions extraction step (34), the first unexecuted condition of said chain is also obtained, such that, in the input correction step (25), the correction prompt is also generated based on said first unexecuted condition.

12. A non-transitory computer-readable storage medium that stores thereon a plurality of instructions which, when executed by a computer (500), cause said computer (500) to perform the method steps according to any of claims 1 to 11.

13. Computer (500) comprising a processor (502), and a non-transitory computer-readable storage medium operatively coupled to the processor (502), the non-transitory computer-readable storage medium storing thereon a plurality of instructions which, when executed by the processor (502), cause the computer (500) to perform the method steps according to any of claims 1 to 11.
